# EUROPEAN PATENT APPLICATION

(11) **EP 2 713 622 A1**
(43) Date of publication of application: **02.04.2014**
(21) Application number: 12869838.8
(22) Date of filing: 20.09.2012
(51) Int. Cl.: H04N 21/238, H04N 21/60

(54) **STREAMING MEDIA TRANSMITTING METHOD, DEVICE AND SYSTEM**

(30) Priority: 28.02.2012 CN 201210047856
(71) Applicant: Huawei Device Co., Ltd., Longgang District Shenzhen Guangdong 518129 (CN)
(72) Inventor: GUO, Zhigang, Shenzhen, Guangdong 518129 (CN)
(74) Representative: Haley, Stephen
(86) International application number: PCT/CN2012/081629
(87) International publication number: WO 2013/127172

(57) **Abstract**

Embodiments of the present invention relate to the field of streaming media technology and provide a streaming media transmission method, device, and system, so that a streaming media transmission manner is dynamically adjusted to adapt to the change of a terminal usage state, thereby avoiding a waste of bandwidth resources and network traffic, and improving user experience. The method includes: receiving a playback state parameter reported by a terminal; obtaining streaming media information according to the playback state parameter; and sending the obtained streaming media information to the terminal. The embodiments of the present invention are applied to streaming media transmission.

## Description

### TECHNICAL FIELD

The present invention relates to the field of streaming media technology, and in particular, to a streaming media transmission method, device, and system.

### BACKGROUND

The streaming media technology refers to a technology in which continuous images or sound information is divided into compressed packages in a special compression manner, and then these compressed packages are continuously transmitted by a video/audio server to a terminal in real time. To download and play images or sound information by using the streaming media technology, it is necessary to construct a buffer area on the terminal first, and pre-download a small segment of data of a file as a buffer before playback. A player program of the terminal may obtain this small segment of data downloaded in advance from the buffer area and play the segment of data. When the data is played, the remaining part of the multimedia file is continuously downloaded and filled into the buffer area, so that a user may watch continuous images or listen to the sound information while downloading the images or the sound information, and it is unnecessary to download the complete compressed file before watching.

When listening to or watching a streaming audio or video on the terminal, the user generally has different requirements for the receiving quality of the streaming media. For example, when watching a segment of a streaming video, if the user also wants to browse web page information online at the same time, the user generally switches a player to perform playback in a small window, or even switches the player to perform playback at the background, and the user only listens to the sound while not watching the video. At this time, during streaming media transmission of a video stream, data is still transmitted according to a video resolution standard for large-window playback, which not only causes a huge waste of limited bandwidth resources and network traffic of the user, but also lowers the quality of other network services used by the user. Hence, a traditional streaming media transmission manner causes a waste of bandwidth resources and network traffic, and degrades user experience.

### SUMMARY

Embodiments of the present invention provide a streaming media transmission method, device, and system, and are capable of solving the problem of the waste of bandwidth resources and network traffic.

To achieve the larger than objective, the embodiments of the present invention adopt the following technical solutions:

In one aspect, an embodiment of the present invention provides a streaming media transmission method, which involves a server, and the method includes:
receiving a playback state parameter reported by a terminal;
obtaining streaming media information according to the playback state parameter; and
sending the obtained streaming media information to the terminal.

In another aspect, an embodiment of the present invention provides a streaming media transmission method, which involves a streaming media playback terminal, and the method includes:
reporting a playback state parameter to a server; and
receiving streaming media information obtained according to the playback state parameter and sent by the server.

In another aspect, an embodiment of the present invention provides a server, including:
a parameter receiving unit, configured to receive a playback state parameter reported by a terminal;
an obtaining unit, configured to obtain streaming media information according to the playback state parameter; and
a sending unit, configured to send the obtained streaming media information to the terminal.

In another aspect, an embodiment of the present invention provides a streaming media playback terminal, including:
a reporting unit, configured to report a playback state parameter to a server; and
a streaming media receiving unit, configured to receive streaming media information obtained according to the playback state parameter and sent by the server.

In still another aspect, an embodiment of the present invention provides a streaming media transmission system, including the foregoing server and the foregoing streaming media playback terminal.

In the streaming media transmission method, device, and system according to the embodiments of the present invention, a server receives a playback state parameter reported by a streaming media playback terminal, and adjusts a streaming media transmission parameter according to the parameter. In this way, the streaming media transmission manner may be dynamically adjusted to adapt to the change of an actual usage state of a user, thereby solving the problem of a waste of bandwidth resources and network traffic, and improving user experience.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic flow chart of a streaming media transmission method according to an embodiment of the present invention;
FIG. 2 is a schematic flow chart of another streaming media transmission method according to an embodiment of the present invention;
FIG. 3 is a schematic flow chart of another streaming media transmission method according to an embodiment of the present invention;
FIG. 4 is a schematic signaling flow chart of another streaming media transmission method according to an embodiment of the present invention;
FIG. 5 is a schematic structural diagram of a server according to an embodiment of the present invention; and
FIG. 6 is a schematic structural diagram of a streaming media playback terminal according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

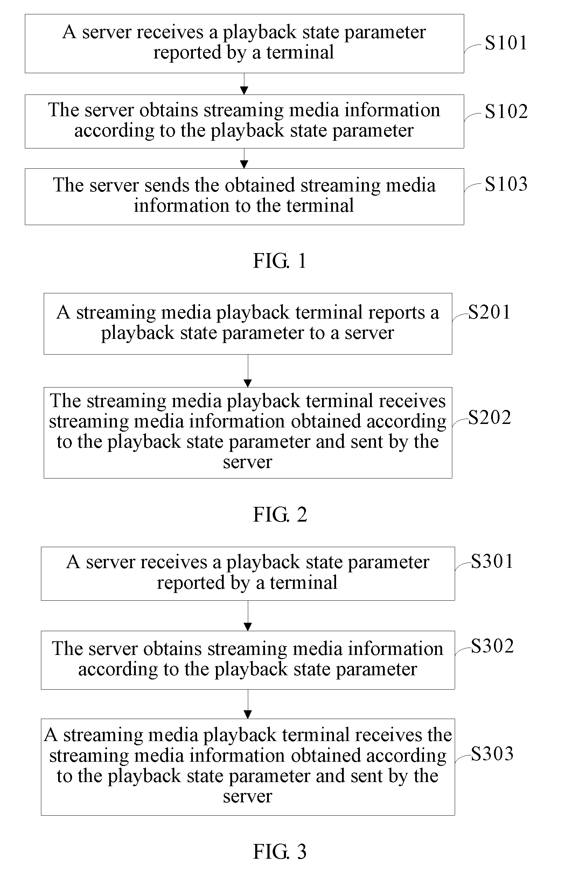

A streaming media transmission method according to an embodiment of the present invention involves a server, and as shown in FIG. 1, includes the following steps:

S 101: A server receives a playback state parameter reported by a terminal.

S102: The server obtains streaming media information according to the playback state parameter.

S 103: The server sends the obtained streaming media information to the terminal.

A streaming media transmission method according to an embodiment of the present invention involves a streaming media playback terminal, and as shown in FIG. 2, includes the following steps:

S201: A streaming media playback terminal reports a playback state parameter to a server.

S202: The streaming media playback terminal receives streaming media information obtained according to the playback state parameter and sent by the server.

In the streaming media transmission method according to the embodiment of the present invention, the server receives the playback state parameter reported by the streaming media playback terminal, and adjusts the streaming media transmission parameter according to the parameter. In this way, the streaming media transmission manner may be dynamically adjusted to adapt to the change of an actual usage state of a user, thereby avoiding a waste of bandwidth resources and network traffic, and improving user experience.

Another streaming media transmission method according to an embodiment of the present invention, as shown in FIG. 3, includes the following steps:

S301: A server receives a playback state parameter reported by a terminal.

Specifically, the playback state parameter may include at least one of a playback window size and a playback volume.

For example, a user may change the size of a video playback window by dragging the frame of the playback window, or maximize or minimize the video playback window, or place the video playback window at the background to perform playback. When the user minimizes the video playback window or places the video playback window at the background to perform playback, the size of the video playback window may be regarded as 0.

When browsing a streaming video online, the user generally needs to listen to audio information and browsing video information at the same time. The user may choose to increase or decrease the volume, or choose a mute option. When the user chooses the mute option, audio playback volume may be regarded as 0.

S302: The server obtains streaming media information according to the playback state parameter.

The streaming media information includes at least one of streaming video information and streaming audio information.

It should be noted that the server obtaining streaming media information according to the playback state parameter may specifically include:
determining a transmission parameter of the streaming media information according to a parameter interval where the playback state parameter is located, and adjusting the transmission parameter of the streaming media information; and
obtaining the streaming media information in which the transmission parameter has been adjusted.

When the playback state parameter is the player window size, the server may adjust a video data rate in the streaming media information according to the parameter interval where the player window size is located. At this time, the parameter interval may be a manually preset playback window size interval, and the transmission parameter may include at least one of: resolution, a sending bit rate, and a sending compression ratio of the streaming video information. For example, when the current playback window size of the user is within an interval ranging from larger than 1/4 of the display screen to smaller than 1/2 of the display screen, the bit rate of the streaming video is 256kbps. When the user switches a streaming video player from small-screen playback to large-screen playback, larger thansmaller than the server may increase the bit rate of the streaming video to 512kbps if the changed playback window size is within an interval ranging from 1/2 of the display screen or larger than to smaller than a full display screen; and when the user further increases the playback window size to the full display screen, the server may increase the bit rate of the streaming video to 1Mbps. Similarly, if the changed playback window size is within an interval ranging from larger than 1/8 of the display screen to smaller than 1/4 of the display screen, the server may decrease the bit rate of the streaming video to 128kbps; and when the user further decreases the playback window size until the playback window is minimized or performs playback at the background, the server may decrease the bit rate of the streaming video to 0, and not send the streaming video information. In this way, when the user needs high-quality playback, the server may perform automatic adjustment to adapt to a high-quality playback requirement. In addition, when the streaming media information does not need to be sent, the server stops sending the streaming media information, thereby further avoiding a waste of bandwidth resources and network traffic.

Similarly, when the playback state parameter is the playback volume, the server may adjust an audio data rate in the streaming media information according to a parameter interval where the playback volume is located. At this time, the parameter interval may be a manually preset volume interval, and the transmission parameter may include at least one of: a sending bit rate and a sending compression ratio of the streaming audio information. If the user adjusts the volume to be very low, and the volume falls into a low sound quality audio interval, it indicates that the user does not have a high requirement for sound quality, and then the streaming audio information is transmitted to the user based on a bit rate for low sound quality.

In the embodiment of the present invention, the streaming video information and the streaming audio information may be a video data rate and an audio data rate in one streaming media file. That the server adjusts the transmission parameter of the streaming media information specifically refers to adjusting at least one of the video data rate and the audio data rate in the streaming media information. For specific method steps through which the server adjusts the video data rate and the audio data rate in the streaming media information, reference may be made to a method for adjusting data rate data in streaming media information in the prior art; the method belongs to the prior art, and is not described again in the embodiment of the present invention.

It should be noted that, the server may change the transmission parameter of the streaming video information after receiving the playback window size information, change the transmission parameter of the streaming audio information after receiving the playback volume, and change the transmission parameter of the streaming video information and the transmission parameter of the streaming audio information after receiving the playback window size information and the playback volume. That is, if the playback window size information reported by the terminal is not received, the transmission parameter of the streaming audio information will not be changed; and if the playback volume reported by the terminal is not received, the transmission parameter of the streaming audio information will not be changed.

In this way, when the user needs high-quality playback, the server may perform automatic adjustment to adapt to a high-quality playback requirement. In addition, when the streaming media information does not need to be sent, the server stops sending the streaming media information, thereby avoiding a waste of bandwidth resources and network traffic.

Optionally, that the server obtains streaming media information according to the playback state parameter may further specifically include:
obtaining a resource address corresponding to the playback state parameter according to the playback state parameter; and
obtaining the streaming media information from the resource address.

For example, a preset table of mapping between playback state parameters and resource addresses may be queried according to the playback state parameter, to determine the resource address corresponding to the playback state parameter. The playback state parameter includes the playback window size and the playback volume, and the server may obtain the playback volume and a streaming media resource that matches the playback window size by querying the table according to the playback state parameter.

For example, as shown in Table 1 below, the table of the mapping between playback state parameters and resource addresses may be established according to actual usage experience or an actual program source resource on the network side as follows:

**Table 1**

| Playback state parameter | Resource address |
|---|---|
| Playback window size: full screen; | Program source 1 with a video bit rate of 1Mbps and an audio bit rate of 128kbps |
| Playback volume: (0,20] | |
| Playback window size: 1/2 of the display screen to full screen; | Program source 2 with a video bit rate of 512kbps and an audio bit rate of 128kbps |
| Playback volume: (0,20] | |
| Playback window size: 1/4 of the display screen to 1/2 of the display screen; | Program source 3 with a video bit rate of 256kbps and an audio bit rate of 128kbps |
| Playback volume: (0,20] | |
| Playback window size: 1/8 of the display screen to 1/4 of the display screen; | Program source 4 with a video bit rate of 128kbps and an audio bit rate of 128kbps |
| Playback volume: (0,20] | |
| Playback window size: minimized; | Program source 5 with no video and with an audio bit rate of 128kbps |
| Playback volume: (0,20] | |
| Playback window size: full screen; | Program source 6 with a video bit rate of 1Mbps and with no audio |
| Playback volume: 0 | |
| Playback window size: 1/2 of the display screen to full screen; | Program source 7 with a video bit rate of 512kbps and with no audio |
| Playback volume: 0 | |
| Playback window size: 1/4 of the display screen to 1/2 of the display screen; | Program source 8 with a video bit rate of 256kbps and with no audio |
| Playback volume: 0 | |
| Playback window size: 1/8 of the display screen to 1/4 of the display screen; | Program source 9 with a video bit rate of 128kbps and with no audio |
| Playback volume: 0 | |
| Playback window size: minimized; | No video and no audio |
| Playback volume: 0 | |

For example, when the server receives the playback state parameter reported by the terminal and determines that the playback window size is greater than 1/2 of the display screen but smaller than the full screen of the display and the volume is 15, with reference to Table 1, the server may choose to obtain the streaming media information that includes the video information and audio information from the program source 2 with a bit rate of 512kbps and an audio bit rate of 128kbps.

S303: A streaming media playback terminal receives the streaming media information obtained according to the playback state parameter and sent by the server.

In the streaming media transmission method according to the embodiment of the present invention, the server receives the playback state parameter reported by the streaming media playback terminal, and adjusts the streaming media transmission parameter according to the parameter. In this way, the streaming media transmission manner may be dynamically adjusted to adapt to the change of an actual usage state of a user, thereby avoiding a waste of bandwidth resources and network traffic, and improving user experience. With the use of such method, when the user needs high-quality playback, the server may perform automatic adjustment to adapt to a high-quality playback requirement. In addition, when the streaming media information does not need to be sent, the server stops sending the streaming media information, thereby further avoiding a waste of bandwidth resources and network traffic.

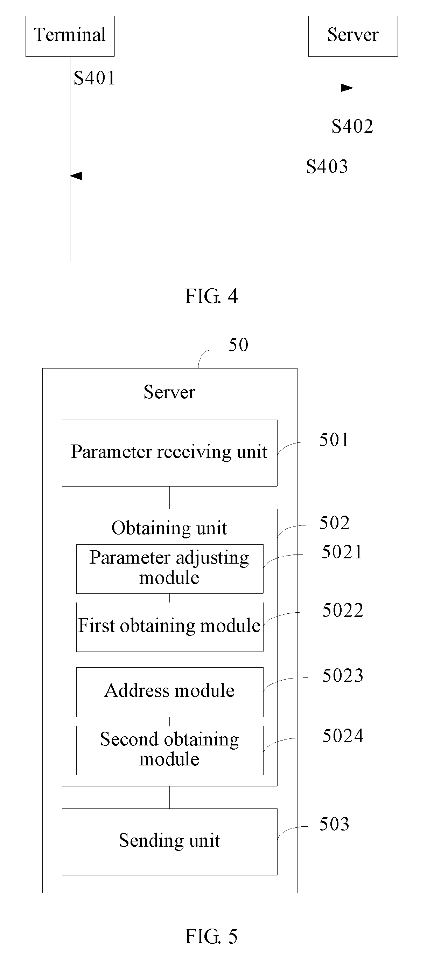

Another streaming media transmission method according to an embodiment of the present invention may be based on control of an RTSP (Real-Time Stream Protocol, real-time transport protocol). As shown in FIG. 5, the method includes the following steps:

S401: A streaming media playback terminal reports a playback state parameter to a server.

For example, the terminal may notify the server of the playback state parameter by reporting a Describe message in the RTSP. The playback state parameter may include video playback window size or an audio playback volume.

When a playback state of the streaming media playback terminal changes, the terminal records the playback state parameter that has been changed, saves current playback position information, and notifies the server of the playback state parameter.

Specifically, that the playback state of the streaming media playback terminal changes may include the change of a video playback state and the change of an audio playback state, and may specifically refer to the change of a video playback window size or the change of an audio playback volume. The current playback position information may include a current video playback position and a current audio playback position.

The streaming media playback terminal may report stop information at the same time. After receiving the stop information sent by the terminal, the server stops current streaming media information transmission, and returns acknowledgment information to the terminal.

For example, the terminal may instruct, by sending a TEARDOWN message in the RTSP, the server to interrupt sending the streaming media information that contains a current transmission parameter; when a streaming media playback parameter changes to 0, the terminal may instruct, by sending a PAUSE command in the RTSP, the server to stop sending the streaming media information.

S402: The server obtains the streaming media information according to the playback state parameter reported by the terminal.

Specifically, reference may be made to step S302 in the foregoing embodiment, and description is not repeated herein.

S403: The server sends the obtained streaming media information to the terminal.

Specifically, the terminal may send a streaming media information connection request to the server, and after receiving the streaming media information connection request reported by the terminal, the server returns acknowledgment information to the terminal.

For example, the terminal may send a SetUp message in the RTSP to the server to request initiating a new streaming media information connection.

After confirming that the connection has been established, the terminal may report a playback request to the server.

For example, the terminal may send to the server a Play message in the RTSP to request the server to start transmitting the streaming media information.

After receiving the playback request reported by the terminal, the server may start playing the obtained streaming media information from the saved playback position.

In the streaming media transmission method according to the embodiment of the present invention, the server receives the playback state parameter reported by the streaming media playback terminal, and adjusts the streaming media transmission parameter according to the playback state parameter. In this way, the streaming media transmission manner may be dynamically adjusted to adapt to the change of an actual usage state of a user, thereby avoiding a waste of bandwidth resources and network traffic, and improving user experience. With the use of such method, when the user needs high-quality playback, the server may perform automatic adjustment to adapt to a high-quality playback requirement. In addition, when the streaming media information does not need to be sent, the server stops sending the streaming media information, thereby further avoiding a waste of bandwidth resources and network traffic.

A server 50 according to an embodiment of the present invention corresponds to the foregoing method embodiment, and may be used for all of the steps in the foregoing method embodiment. Detailed method steps corresponding to the server 50 have been described in the foregoing method embodiment, and are not described in detail herein again. As shown in FIG. 5, the server 50 includes:
a parameter receiving unit 501, configured to receive a playback state parameter reported by a terminal;
an obtaining unit 502, configured to obtain streaming media information according to the playback state parameter; and
a sending unit 503, configured to send the obtained streaming media information to the terminal.

The streaming media transmission server according to the embodiment of the present invention receives the playback state parameter reported by the streaming media playback terminal, and adjusts the streaming media transmission parameter according to the playback state parameter. In this way, the streaming media transmission manner may be dynamically adjusted to adapt to the change of an actual usage state of a user, thereby avoiding a waste of bandwidth resources and network traffic, and improving user experience.

The obtaining unit 502 may specifically include a parameter adjusting module 5021 and a first obtaining module 5022.

The parameter adjusting module 5021 is configured to determine a transmission parameter of the streaming media information according to a parameter interval where the playback state parameter is located, and adjust the transmission parameter of the streaming media information.

Further, when the playback state parameter is a player window size, the adjusted transmission parameter may include at least one of resolution, a sending bit rate, and a sending compression ratio of streaming video information.

When the playback state parameter is playback volume, the adjusted transmission parameter may include at least one of a sending bit rate and a sending compression ratio of streaming audio information.

The first obtaining module 5022 is configured to obtain the streaming media information in which the transmission parameter has been adjusted.

Optionally, the obtaining unit 502 may specifically include:
an address module 5023, configured to obtain a resource address corresponding to the playback state parameter according to the playback state parameter, for example, query a preset table of mapping between playback state parameters and resource addresses according to the playback state parameter, and determine a resource address corresponding to the playback state parameter; and
a second obtaining module 5024, configured to obtain the streaming media information from the resource address.

It should be noted that the playback state parameter may include at least one of a video playback window size and a playback volume.

It should be noted that, for a detailed implementation process, reference may be made to each process of the method embodiment, and description is not repeated herein.

The streaming media transmission server according to the embodiment of the present invention receives the playback state parameter reported by the streaming media playback terminal, and adjusts the streaming media transmission parameter according to the playback state parameter. In this way, the streaming media transmission manner may be dynamically adjusted to adapt to the change of an actual usage state of a user, thereby avoiding a waste of bandwidth resources and network traffic, and improving user experience.

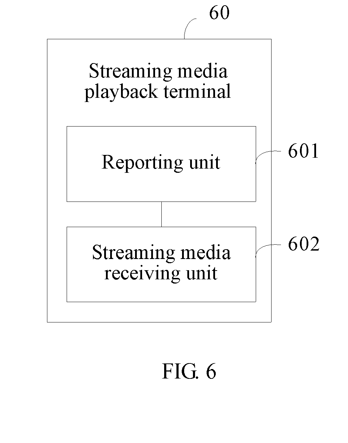

A streaming media playback terminal 60 according to an embodiment of the present invention corresponds to the foregoing method embodiment, and may be used for all of the steps in the foregoing method embodiment. Detailed method steps corresponding to the streaming media playback terminal 60 have been described in the foregoing method embodiment, and are not described in detail herein again. As shown in FIG. 6, the streaming media playback terminal 60 includes:
a reporting unit 601, configured to report a playback state parameter to a server; and
a streaming media receiving unit 602, configured to receive streaming media information obtained according to the playback state parameter and sent by the server.

With the streaming media playback terminal according to the embodiment of the present invention, the server receives the playback state parameter reported by the streaming media playback terminal, and adjusts the streaming media transmission parameter according to the playback state parameter. In this way, the streaming media transmission manner may be dynamically adjusted to adapt to the change of an actual usage state of a user, thereby avoiding a waste of bandwidth resources and network traffic, and improving user experience.

Further, the parameter reporting unit 601 may specifically be configured to:
report video playback window size to the server, or report a playback volume to the server.

The streaming media information may include at least one of streaming video information and streaming audio information.

It should be noted that, for a detailed implementation process, reference may be made to each process of the method embodiment, and description is not repeated herein.

With the streaming media transmission playback terminal according to the embodiment of the present invention, the server receives the playback state parameter reported by the streaming media playback terminal, and adjusts the streaming media transmission parameter according to the playback state parameter. In this way, the streaming media transmission manner may be dynamically adjusted to adapt to the change of an actual usage state of a user, thereby avoiding a waste of bandwidth resources and network traffic, and improving user experience.

A streaming media transmission system according to an embodiment of the present invention includes the foregoing server and the foregoing streaming media playback terminal.

The server is configured to receive a playback state parameter reported by the terminal; and if it is determined according to the playback state parameter that a transmission parameter of streaming media information needs to be adjusted, adjust the transmission parameter of the streaming media information, and send to the terminal the streaming media information in which the transmission parameter has been adjusted.

The streaming media playback terminal is configured to report the playback state parameter to the server; and receive the streaming media information obtained according to the playback state parameter and sent by the server.

In the streaming media transmission system according to the embodiment of the present invention, the server receives the playback state parameter reported by the streaming media playback terminal, and adjusts the streaming media transmission parameter according to the playback state parameter. In this way, the streaming media transmission manner may be dynamically adjusted to adapt to the change of an actual usage state of a user, thereby avoiding a waste of bandwidth resources and network traffic, and improving user experience.

A person of ordinary skill in the art may understand that, all or a part of the steps in the foregoing method embodiments may be implemented by a program instructing relevant hardware. The foregoing program may be stored in a computer readable storage medium. When the program runs, the foregoing steps in the method embodiments are performed. The foregoing storage medium may be any mediums capable of storing program code, such as a ROM, a RAM, a magnetic disk, or an optical disc.

The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A streaming media transmission method, comprising:
receiving a playback state parameter reported by a terminal;
obtaining streaming media information according to the playback state parameter; and
sending the obtained streaming media information to the terminal.

2. The method according to claim 1, wherein the obtaining streaming media information according to the playback state parameter specifically comprises:
determining a transmission parameter of the streaming media information according to a parameter interval where the playback state parameter is located, and adjusting the transmission parameter of the streaming media information; and
obtaining the streaming media information in which the transmission parameter has been adjusted.

3. The method according to claim 2, wherein the playback state parameter comprises at least one of a video playback window size and a playback volume;
when the playback state parameter is a player window size, the transmission parameter comprises at least one of resolution, a sending bit rate, and a sending compression ratio of streaming video information; and
when the playback state parameter is the playback volume, the transmission parameter comprises at least one of a sending bit rate and a sending compression ratio of streaming audio information.

4. The method according to claim 1, wherein the obtaining streaming media information according to the playback state parameter specifically comprises:
obtaining a resource address corresponding to the playback state parameter according to the playback state parameter; and
obtaining the streaming media information from the resource address.

5. The method according to any one of claims 1 to 4, wherein the streaming media information comprises at least one of the streaming video information and the streaming audio information.

6. A streaming media transmission method, comprising:
reporting a playback state parameter to a server; and
receiving streaming media information obtained according to the playback state parameter and sent by the server.

7. The method according to claim 6, wherein the reporting a playback state parameter to a server comprises:
reporting a playback window size to the server; or
reporting a playback volume to the server.

8. The method according to claim 6 or 7, wherein the streaming media information comprises:
at least one of streaming video information and streaming audio information.

9. A server, comprising:
a parameter receiving unit, configured to receive a playback state parameter reported by a terminal;
an obtaining unit, configured to obtain streaming media information according to the playback state parameter; and
a sending unit, configured to send the obtained streaming media information to the terminal.

10. The server according to claim 9, wherein the obtaining unit comprises:
a parameter adjusting module, configured to determine a transmission parameter of the streaming media information according to a parameter interval where the playback state parameter is located, and adjust the transmission parameter of the streaming media information; and
a first obtaining module, configured to obtain the streaming media information in which the transmission parameter has been adjusted.

11. The server according to claim 9, wherein the obtaining unit specifically comprises:
an address module, configured to obtain a resource address corresponding to the playback state parameter according to the playback state parameter; and
a second obtaining module, configured to obtain the streaming media information from the resource address.

12. A streaming media playback terminal, comprising:
a reporting unit, configured to report a playback state parameter to a server; and
a streaming media receiving unit, configured to receive streaming media information obtained according to the playback state parameter and sent by the server.

13. The streaming media playback terminal according to claim 12, wherein the reporting unit is specifically configured to:
report a playback window size to the server; or
report a playback volume to the server.

14. The streaming media playback terminal according to claim 12 or 13, wherein the streaming media information comprises:
at least one of streaming video information and streaming audio information.

15. A streaming media transmission system, comprising the server according to any one of claims 9 to 11 and the streaming media playback terminal according to any one of claims 12 to 14.
